(19) Europäisches Patentamt
European Patent Office
Office européen des brevets

(11) EP 2 715 458 B1

(12) EUROPEAN PATENT SPECIFICATION

(45) Date of publication and mention
of the grant of the patent:
**14.11.2018 Bulletin 2018/46**

(51) Int Cl.:
**G05B 6/02** (2006.01)

(21) Application number: **12755927.6**

(22) Date of filing: **28.05.2012**

(86) International application number:
**PCT/PL2012/000036**

(87) International publication number:
**WO 2012/165980 (06.12.2012 Gazette 2012/49)**

(54) **TUNING METHOD OF PI AND PID CONTROLLERS**

VERFAHREN ZUR EINSTELLUNG DER PI- UND PID-REGLERPARAMETER

PROCÉDÉS DE RÉGLAGE DES PARAMÈTRES DE RÉGULATEURS PI ET PID

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2011 PL 39503311**

(43) Date of publication of application:
**09.04.2014 Bulletin 2014/15**

(73) Proprietor: **Politechnika Swietokrzyska
25-314 Kielce (PL)**

(72) Inventors:
• **WCISLIK, Miroslaw
PL-25-140 Kielce (PL)**
• **LASKAWSKI, Michal
PL-25-437 Kielce (PL)**

(56) References cited:
**US-A- 5 172 312    US-A- 5 453 925
US-A- 5 587 899    US-A- 6 081 751**

• UTKAL MEHTA ET AL: "On-line identification and
control methods for PID controllers", CONTROL
AUTOMATION ROBOTICS&VISION (ICARCV),
2010 11TH INTERNATIONAL CONFERENCE ON,
IEEE, 7 December 2010 (2010-12-07), pages
1507-1511, XP031899977, DOI:
10.1109/ICARCV.2010.5707428 ISBN:
978-1-4244-7814-9
• TAVAKOLI S ET AL: "Optimal Tuning of PID
Controllers for First Order Plus Time Delay
Models Using Dimensional Analysis", CONTROL
AND AUTOMATION, 2003. ICCA. FINAL
PROGRAM AND BOOK OF ABSTRACT S. THE
FOURTH INTERNATIONAL CONFERENCE ON
JUNE 10-12, 2003, PISCATAWAY, NJ, USA,IEEE,
12 June 2003 (2003-06-12), pages 942-946,
XP031922754, DOI: 10.1109/ICCA.2003.1595161
ISBN: 978-0-7803-7777-6

**Description**

The subject of the invention is the tuning method of PI and PID controllers parameters.

There are a lot of well-known tuning methods of the PI and PID controllers parameters collected by O'Dwyer's book: Handbook of PI and PID Controller the Engine tuning Rules, Imperial College Press, 2006. The PI and PID tuning methodology is based on procedures which have been worked out by Ziegler and Nichols (Ziegler J.G., Nichols N.B.: The optimum Setting the odds Automatic Controllers, ASME, Rochester, N. Y., 1942). There are two procedures: the first is called the frequency response method and the second - step response method.

The frequency method is based on the properties analysis of the closed-loop control system (error-actuated control system) being on the stability limit. The proportional P controller is used at the first stage of this tuning procedure. Its gain is increasing up to the achieve sustained oscillations of the controlled signal. Then the controller proportional gain and the oscillation period of closed loop system are assessed. These values are used to determine PI and PID controller settings.

The step response method is based on a rough estimation of the controlled system model parameters. The first order filter with dead time is the estimating model. The settings of PI or PID controllers working in the feedback control system are calculated on the basis of the estimated values.

The controller properties were calculated for the P controller. The replacement of the P controller with the PI or PID controllers changes the control system characteristics. It makes difficult to select right controller settings which assures proper work of control system. The first stages of the tuning procedures do not identify controlled system dynamics precisely. That is why the settings proposed by these procedures do not assure the proper transient waveform.

There are also known methods which use the proportional and integral parts of the controller during the identification stage e.g. Utkal Mehta et al., "On-line Identification and Control Methods for PID Controllers", 2010 11th Int. Conf. Control, Automation, Robotics and Vision Singapore, 7-10th December 2010., Luo et al., "System and method for closed loop auto-tuning of PID controllers" US 6081751, Jun. 27, 2000. They do not provide satisfying control quality. It is caused by the identification procedures which do not take into account proper control quality criterion. So, it is crucial to use the proper control quality index and formulate the formulae that will guarantee optimal control process. This makes these formulae an integral part of the controller tuning procedure. There are also known methods which use the on-off controller to achieve oscillation of the controlled signal during identification stage (Wojsznis et al., "System and method for automatically tuning a process controller", US 5453925, Sep. 26, 1995). It makes it possible to obtain an oscillating controlled signal for the low-order controlled systems. This approach has drawbacks. In some aspects, the on-off controller has similar characteristics as the proportional controller, so it makes it difficult to find suitable parameters that will be adequate for the final controller such as the PI or PID controller. Another disadvantage is the need to disconnect the control system loop in order to switch the controller from the on-off controller to the final controller. This can be dangerous for the controlled system.

There are also known the controller tuning methods based on the frequency characteristics analysis (Y. lino, T. Shigemasa: Control system and method for deterministic control parameters of plants, US5172312). Those methods require earlier determination of the frequency characteristic, which may be inconvenient and time-consuming.

The computer technology progress makes it possible to develop a numerical method of controller tuning parameters which are optimal in the sense of the selected criterion. The criterions may be formulated by use of known and frequently used analytical formulas such as the ITAE criterion (A. E. Awouda, R. B. Mamat: New PID tuning rule using ITAE criteria, IJE, 2010). Optimality criterion can also be formulated by equations which may be solved only by use of numerical optimization methods (R. Toscano: A Simple robust PI-PID controller design via numerical optimization approach, JPC, 2005). The exact knowledge of the controlled system dynamics is the prerequisite to get optimal controller parameters. That dynamics is often approximated by first order filter with dead time model. The main advantage of the mode! is a limited set of parameters while the disadvantage is excessively simplified controlled system dynamics, especially for incorrectly identified model parameters. The above mentioned tuning methods do not include the identification stage which makes them useless.

According to the invention, only the integral controller is added to the controlled system at the first stage of the PI or PID controller tuning procedure, which is the first order filter with dead time. It means that the proportional and differential parts of the PID controller are disconnected. This is the invention's distinctive feature. It is assumed that the proportional gain $k$ of the controlled system in steady state is known. At the next stage, the integral controller gain $k_I$ is increasing to achieve sustained oscillation with constant period. When the closed-loop control system is on the stability limit, the ultimate controller gain $k_U$ and the oscillation period $T_{osc}$ are assessed. The formula: $T = \dfrac{\sqrt{k_U^2 k^2 - \omega_{osc}^2}}{\omega_{osc}^2}$

where $\omega_{osc} = 2\pi/T_{osc}$ allows to calculate the first order lag $T$ and the $\theta = \frac{L}{T} = \left(arcctg(\omega_{osc}T)\right)/(\omega_{osc}T)$ coefficient of the approximating model where the $L$ is dead time. Formulas

$$k_\circ = 10^{-0.659+0.465/\sqrt{\theta}}$$
$$\tau = 0.88 + 0.37\,\theta$$

defines the controller

model properties. The controller properties are calculated from

$$k_{pN} = \frac{k_\circ}{k}$$
$$T_{iN} = \tau \cdot T$$

where $k_{pN}$ is the proportional controller gain and the $T_{iN}$ is integral controller time constant.

Only the integral controller is added to the controlled system at the first stage of the invented tuning procedure for the PID type controller, which is the first order filter with dead time (the proportional and the derivative PID controller parts are disconnected only the integral part is active). It is distinctive feature of this invention. It is assumed that the proportional gain of the controlled system in steady state is known, this is the $k$ coefficient. Next, the gain of the integral controller $k_I$ is changed to get the system to the stability limit. Then the ultimate integral controller gain $k_U$ and the oscillation period $T_{osc}$ are assessed. The formula: $T = \dfrac{\sqrt{k_U^2 k^2 - \omega_{osc}^2}}{\omega_{osc}^2}$ where $\omega_{osc} = 2\pi/T_{osc}$ allows to calculate the first order lag $T$ and the $\theta = \frac{L}{T} = \left(arcctg(\omega_{osc}T)\right)/(\omega_{osc}T)$ coefficient of the approximating model where the $L$ is dead time. The formulas

$$k_\circ = 10^{-0.7847} \cdot 10^{0.7942/\sqrt[3]{\theta}}$$
$$\tau = 0.99 + 0.389 \cdot \theta + 0.00115 \cdot \theta^2$$
$$\delta = -0.1467 + 0.4734\sqrt{\theta}$$

define the controller model properties. The controller parameters are calculated from

$$k_{pN} = \frac{k_\circ}{k}$$
$$T_{iN} = \tau \cdot T$$
$$T_{dN} = \delta \cdot T$$

where $k_{pN}$ is the proportional controller gain, the $T_{iN}$ is integral controller time constant and the $T_{dN}$ is derivative controller time constant.

Assumptions to the invented tuning method are:

1. The proportional gain of the controlled system is known. It can be easily determined by the step response experiment.

2. The controlled system dynamics is acceptably approximated by the first order filter with dead time (Kupfmuller model): $G_{ob}(s) = \dfrac{k\,e^{-sL}}{1+sT}$, where: $k$ is the proportional gain, $T$ is the first order lag and the $L$ is dead time.

At the first stage of the invented procedure the controlled system is connected in series with the integral type controller with $k_I$ gain coefficient. Next, the integral controller gain is increased to get the closed-loop control system to the stability limit. At that point, the control system sustained oscillation period $T_{osc}$ and the controller ultimate gain $k_U$ are described and stored.

The system consists of the integral controller connected in series and the first order filter with dead time the first order filter time constant of the controlled system model is estimated using the formula: $T = \dfrac{\sqrt{k_U^2 k^2 - \omega_{osc}^2}}{\omega_{osc}^2}$ where

$\omega_{osc} = 2\pi/T_{osc}$.

The $\theta = \frac{L}{T} = \left(arcctg(\omega_{osc}T)\right)/(\omega_{osc}T)$ coefficient, defined as the quotient of the first order lag $T$ and the dead time $L$, is calculated from the phase shift of the approximating model of the open-loop control system.

The setting of the PI and PID type controllers models were calculated as optimal according to the ITAE criterion (integral of the product of time and the absolute control error of closed loop system).

The optimal setting of the PI and PID controllers were calculated as a function of $\theta$ coefficient. Introduction of

the $\theta$ coefficient facilitates the calculation, because of the decreasing number of input variables. The time settings of the controllers are dimensionless and related to time constant of the control object first order filter *T*.

The optimal settings (according to the ITAE criterion) of the PID controller are approximated by the following formulas:

$$k_\circ = 10^{-0.7847} \cdot 10^{0.7942/\sqrt[3]{\theta}}$$

$$\tau = 0.99 + 0.389 \cdot \theta + 0.00115 \cdot \theta^2$$

$$\delta = -0.1467 + 0.4734\sqrt{\theta}$$

For the PI controller the optimal settings according to the ITAE criterion are approximated by formulas:

$$k_\circ = 10^{-0.659+0.465/\sqrt{\theta}}$$

$$\tau = 0.88 + 0.37\,\theta$$

Since the properties of the controller model are related to the coefficients of the controlled system model, the real controller settings have to be calculated by the following formulas:

$$k_{pN} = \frac{k_\circ}{k}$$

$$T_{iN} = \tau \cdot T$$

$$T_{dN} = \delta \cdot T$$

where $k_{pN}$ is the proportional controller gain, $T_{iN}$ is integral controller time constant and $T_{dN}$ is derivative controller time constant.

The subject of this invention is presented in the following six figures. Fig.1 shows the control system block diagram. Figs. 2 to 5 show the step responses of the closed-loop control system obtained for the invented and Ziegler-Nichols methods. The gain of the controlled system is equal to 1. Fig. 2 shows the step responses of the system with PID controller and the $\theta$ = 0.2. Fig. 3 shows step responses of the system with PID controller and the $\theta$ = 2. Fig. 4 shows the step responses of the system with PI controller and the $\theta$ = 0.2. Fig. 5 shows the step responses of the system with PI controller and the $\theta$ = 0.2.

The PI controller settings are presented in the Table 1. The PID controller settings are shown in the Table 2.

Table 1. The PI controller Settings, according to ITAE

| Controlled system properties (k = 1, T = 1) | Controller settings according to the invention | | Standard Ziegler - Nichols controller settings | |
|---|---|---|---|---|
| $\theta$ | $k_\circ$ | $\tau$ | $k_{rN}$ | $T_{iN}$ |
| 0.2 | 2.415 | 0.954 | 3-826 | 0.620 |
| 2 | 0.4683 | 1.62 | 0.684 | 4.575 |

Table 2. The PID controller settings, according to ITAE

| Controlled system properties (k = 1, T = 1) | Controller settings according to the invention | | | Standard Ziegler - Nichols settings | | |
|---|---|---|---|---|---|---|
| $\theta$ | $k_o$ | $\tau$ | $\delta$ | $k_{rN}$ | $T_{iN}$ | $T_{dN}$ |
| 0.2 | 3.744 | 1.062 | 0.065 | 5.10 | 0.372 | 0.093 |
| 2 | 0.701 | 1.78 | 0.523 | 0.912 | 2.745 | 0.686 |

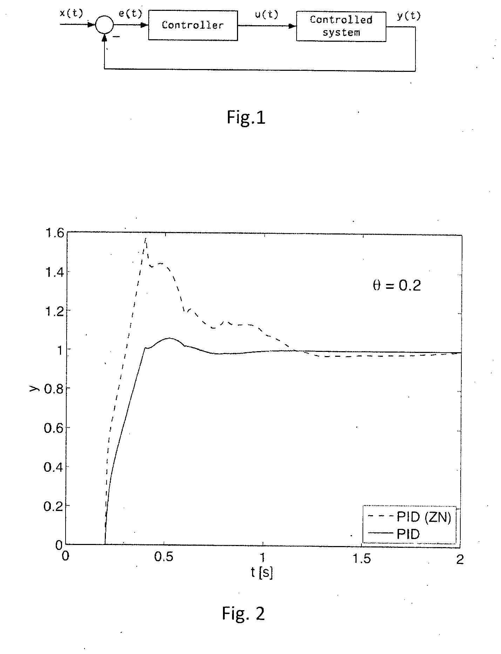

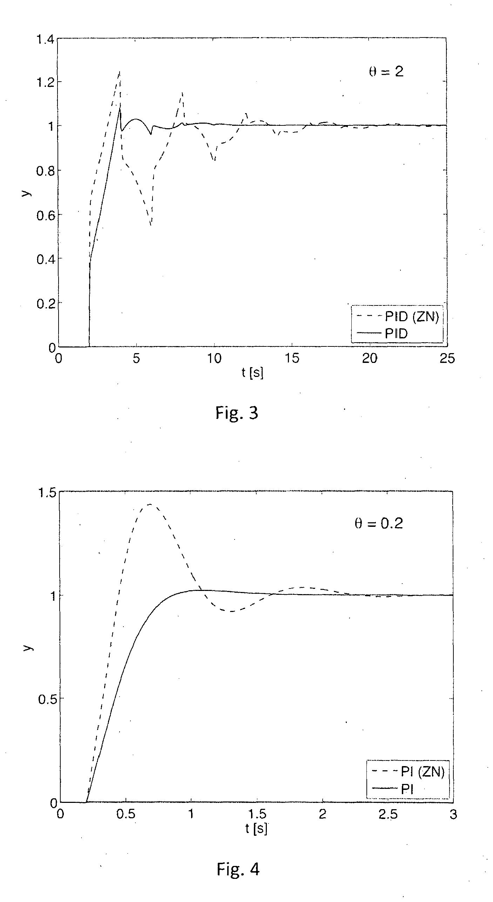

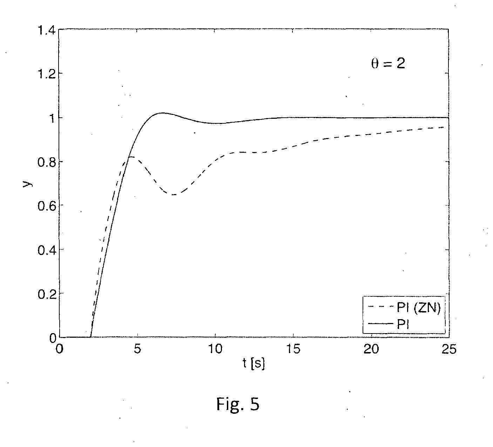

The invented method generates smaller overshoot and oscillation of the controlled value during the transient (Fig. 2 to Fig. 5). Additionally, eliminates the adverse phenomenon of excessively damped of the controlled value for a bigger $\theta$ coefficient and the PI controller (Fig. 5).

## Claims

1. The tuning methods of the PI controller parameters in the closed loop control system of an object, which transfer function may be approximated as a first order filter with time constant $T$ and dead time $L$, and known gain $k$, comprising the steps of:

   a. connecting in series the input of the controlled object with the output of the integral part of the controller which proportional part is disconnected, setting the lowest gain value and closing the control loop,
   b. increasing the controller gain up to stability limit with stable oscillations of the controlled variable and describing the period of the oscillations $T_{osc}$ and fixed value of the controller gain $k_U$,

   c. calculating the first order lag $T$ of the controlled system model using the following formula $T = \dfrac{\sqrt{k_U^2 k^2 - \omega_{osc}^2}}{\omega_{osc}^2}$

   where $\omega_{osc} = 2\pi T_{osc}$ and the coefficient $\theta = \left(arcctg(\omega_{osc}T)\right)/(\omega_{osc}T) = \dfrac{L}{T}$ where $L$ is the controlled system model dead time
   d. calculating the settings of the PI controller from the following formula

   $$k_o = 10^{-0.659 + 0.465/\sqrt{\theta}}$$

   $$\tau = 0.88 + 0.37\,\theta$$

   and determine the physical settings of the real PI controller from the relations $\begin{aligned} k_{pN} &= \dfrac{k_o}{k} \\ T_{iN} &= \tau \cdot T \end{aligned}$ where $k_{pN}$ is the proportional controller gain and $T_{iN}$ is the integral controller time constant.

2. The tuning methods of the PID controller parameters in the closed loop control system of an object, which transfer function may be approximated as a first order filter with time constant $T$ and with dead time $L$, and known gain $k$, comprising the steps of:

   a. connecting in series the input of the controlled object with the output of the integral part of the controller which proportional and differential parts are disconnected, setting the lowest gain value and closing the control loop,
   b. increasing the controller gain up to stability limit with stable oscillations of the controlled variable and describing the period of the oscillations $T_{osc}$ and fixed value of the controller gain $k_U$,

   c. calculating the first order lag $T$ of the controlled system model using the following formula $T = \dfrac{\sqrt{k_U^2 k^2 - \omega_{osc}^2}}{\omega_{osc}^2}$

where $\omega_{osc} = 2\pi/T_{osc}$ and the coefficient $\theta = \left(arcctg(\omega_{osc}T)\right)/(\omega_{osc}T) = \frac{L}{T}$ where $L$ is the controlled system model dead time,

d. calculating the settings of the PID controller from the following formula

$$k_\circ = 10^{-0.7847} \cdot 10^{0.7942/\sqrt[3]{\theta}}$$

$$\tau = 0.99 + 0.389 \cdot \theta + 0.00115 \cdot \theta^2$$ and determine the physical settings of the real PID controller

$$\delta = -0.1467 + 0.4734\sqrt{\theta}$$

$$k_{pN} = \frac{k_\circ}{k}$$

from the relations $$T_{iN} = \tau \cdot T$$ where $k_{pN}$ is the proportional controller gain and $T_{iN}$ is the integral con-

$$T_{dN} = \delta \cdot T$$

troller time constant and $T_{dN}$ is the derivative controller time constant.

## Patentansprüche

1. Methoden zur Einstellung der Parameter eines PI-Reglers im geschlossenen System zur Steuerung des Objekts, dessen Übertragungsfunktion mit einem Filter erster Ordnung mit der Zeitkonstante $T$, mit der Verzögerungszeit $L$ und mit der bekannten Verstärkung $k$ approximiert werden kann, bestehen aus den Phasen:

   a. Reihenschaltung des Eingangs des Objekts der Steuerung mit dem Ausgang des integrierenden Reglerteils, dessen Proportionalteil abgeschaltet ist, Einstellung des niedrigsten Verstärkungswerts und Schließen der Steuerschleife,
   b. Erhöhung der Verstärkung des Reglers bis zur Erreichung der Stabilitätsgrenze mit stabilen Oszillationen der geregelten Variable, Bestimmung der Oszillationsperiode $T_{osc}$ und des eingestellten Verstärkungswerts des Reglers $k_U$,
   c. Berechnung der Zeitkonstante $T$ des gesteuerten Objekts mit der Formel $T = \frac{\sqrt{k_U^2 k^2 - \omega_{osc}^2}}{\omega_{osc}^2}$, wobei $\omega_{osc} = 2\pi/T_{osc}$ und der Koeffizient $\theta = \left(arcctg(\omega_{osc}T)\right)/(\omega_{osc}T) = \frac{L}{T}$ sind, wobei $L$ die Verzögerungszeit des Modells des Objekts der Steuerung ist,
   d. Berechnung der Einstellungen des PI-Reglers mit der Formel $k_\circ = 10^{-0.659+0.465/\sqrt{\theta}}$ $\tau = 0.88 + 0.37\,\theta$ und Bestimmung der physischen Einstellungen des tatsächlichen PI-Reglers aus der Relation $k_{pN} = \frac{k_\circ}{k}$ $T_{iN} = \tau \cdot T$, wobei $k_{pN}$ die proportionale Verstärkung des Reglers und $T_{iN}$ die Zeitkonstante für die Integration des Reglers sind.

2. Methoden zur Einstellung der Parameter eines PID-Reglers im geschlossenen System zur Steuerung des Objekts, dessen Übertragungsfunktion mit einem Filter erster Ordnung mit der Zeitkonstante $T$, mit der Verzögerungszeit $L$ und mit der bekannten Verstärkung $k$ approximiert werden kann, bestehen aus den Phasen:

   a. Reihenschaltung des Eingangs des Objekts der Steuerung mit dem Ausgang des integrierenden Reglerteils, dessen Proportional- und Differentialteil abgeschaltet sind, Einstellung des niedrigsten Verstärkungswerts und Schließen der Steuerschleife,

b. Erhöhung der Verstärkung des Reglers bis zur Erreichung der Stabilitätsgrenze mit stabilen Oszillationen der geregelten Variable, Bestimmung der Oszillationsperiode $T_{osc}$ und des eingestellten Verstärkungswerts des Reglers $k_U$,

c. Berechnung der Zeitkonstante $T$ des gesteuerten Objekts mit der Formel $T = \dfrac{\sqrt{k_U^2 k^2 - \omega_{osc}^2}}{\omega_{osc}^2}$ , wobei $\omega_{osc} = 2\pi/T_{osc}$ und der Koeffizient $\theta = \left(arcctg(\omega_{osc}T)\right)/(\omega_{osc}T) = \dfrac{L}{T}$ sind, wobei $L$ die Verzögerungszeit des Modells des Objekts der Steuerung ist,

d. Berechnung der Einstellungen des PID-Reglers mit der Formel
$$k_o = 10^{-0.7847} \cdot 10^{0.7942/\sqrt[8]{\theta}}$$
$$\tau = 0.99 + 0.389 \cdot \theta + 0.00115 \cdot \theta^2$$
$$\delta = -0.1467 + 0.4734\sqrt{\theta}$$

und Bestimmung der physischen Einstellungen des tatsächlichen PID-Reglers aus der Relation
$$k_{pN} = \frac{k_o}{k}$$
$$T_{iN} = \tau \cdot T \quad,$$
$$T_{dN} = \delta \cdot T$$

wobei $k_{pN}$ die proportionale Verstärkung des Reglers, $T_{iN}$ die Zeitkonstante für die Integration des Reglers und $T_{dN}$ die Zeitkonstante für die Differentiation des Reglers sind.

## Revendications

1. Les méthodes de réglage de paramètres du régulateur PI dans le système de contrôle de l'objet en boucle fermée dont la transférabilité peut être approximée par le filtre de premier ordre avec la constante de temps $T$, la temporisation $L$ et le gain connu $k$ comprennent les étapes suivantes:

   a. Connexion série de l'entrée de l'objet de contrôle à la sortie de la partie d'intégration du régulateur dont la partie proportionnelle est déconnectée, en définissant la valeur de gain la plus basse et en fermant la boucle de contrôle,
   b. Augmentation du gain du régulateur jusqu'à atteindre la limite de stabilité avec des oscillations stables de la variable réglable, détermination de la période d'oscillation $T_{osc}$ et de la valeur de consigne du gain du régulateur $k_U$,

   c. Calcul de la constante de temps $T$ de l'objet contrôlé à l'aide de la formule $T = \dfrac{\sqrt{k_U^2 k^2 - \omega_{osc}^2}}{\omega_{osc}^2}$ où $\omega_{osc} = 2\pi/T_{osc}$ et le coefficient $\theta = \left(arcctg(\omega_{osc}T)\right)/(\omega_{osc}T) = \dfrac{L}{T}$ où $L$ est la temporisation du modèle de l'objet de contrôle,

   d. Calcul des paramètres du régulateur PI à l'aide de la formule $k_o = 10^{-0.659 + 0.465/\sqrt{\theta}}$ et détermination $\tau = 0.88 + 0.37\,\theta$

   des consignes physiques du régulateur PI réel à partir de la relation $\begin{aligned} k_{pN} &= \dfrac{k_o}{k} \\ T_{iN} &= \tau \cdot T \end{aligned}$ où $k_{pN}$ est le gain proportionnel du régulateur et $T_{iN}$ est la constante de temps de l'intégration du régulateur.

2. Les méthodes de réglage de paramètres du régulateur PI dans le système de contrôle de l'objet en boucle fermée dont la transférabilité peut être approximée par le filtre de premier ordre avec la constante de temps $T$, la temporisation $L$ et le gain connu $k$ comprennent les étapes suivantes:

   a. Connexion série de l'entrée de l'objet de contrôle à la sortie de la partie d'intégration du régulateur dont la partie proportionnelle est déconnectée, en définissant la valeur de gain la plus basse et en fermant la boucle de contrôle,
   b. Augmentation du gain du régulateur jusqu'à atteindre la limite de stabilité avec des oscillations stables de la variable réglable, détermination de la période d'oscillation $T_{osc}$ et de la valeur de consigne du gain du régulateur $k_U$,

c. Calcul de la constante de temps $T$ de l'objet contrôlé à l'aide de la formule $T = \frac{\sqrt{k_U^2 k^2 - \omega_{osc}^2}}{\omega_{osc}^2}$ où $\omega_{osc}$ = $2\pi/T_{osc}$ et le coefficient $\theta = \left(arcctg(\omega_{osc}T)\right)/(\omega_{osc}T) = \frac{L}{T}$ où $L$ est la temporisation du modèle de l'objet de contrôle,

d. Calcul des paramètres du régulateur PI à l'aide de la formule $\begin{aligned} k_o &= 10^{-0.7847} \cdot 10^{0.7942/\sqrt[3]{\theta}} \\ \tau &= 0.99 + 0.389 \cdot \theta + 0.00115 \cdot \theta^2 \\ \delta &= -0.1467 + 0.4734\sqrt{\theta} \end{aligned}$ et

détermination des consignes physiques du régulateur PI réel à partir de la relation $\begin{aligned} k_{pN} &= \frac{k_o}{k} \\ T_{iN} &= \tau \cdot T \\ T_{dN} &= \delta \cdot T \end{aligned}$ où $k_{pN}$ est le gain proportionnel du régulateur, $T_{iN}$ est la est la constante de temps de l'intégration du régulateur et $T_{dN}$ est la constante de temps de la différenciation du régulateur.

Fig.1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6081751 A
- US 5453925 A
- US 5172312 A

**Non-patent literature cited in the description**

- **O'DWYER'S.** Handbook of PI and PID Controller the Engine tuning Rules. Imperial College Press, 2006
- **ZIEGLER J.G. ; NICHOLS N.B.** The optimum Setting the odds Automatic Controllers. ASME, 1942
- **UTKAL MEHTA et al.** On-line Identification and Control Methods for PID Controllers. *11th Int. Conf. Control, Automation, Robotics and Vision Singapore,* 07 December 2010
- **A. E. AWOUDA ; R. B. MAMAT.** New PID tuning rule using ITAE criteria. *IJE,* 2010
- **R. TOSCANO.** A Simple robust PI-PID controller design via numerical optimization approach. *JPC,* 2005